(19) Europäisches Patentamt
European Patent Office
Office européen des brevets

(11) **EP 4 397 699 A1**

(12) **EUROPEAN PATENT APPLICATION**
published in accordance with Art. 153(4) EPC

(43) Date of publication:
**10.07.2024 Bulletin 2024/28**

(21) Application number: **22864425.8**

(22) Date of filing: **26.08.2022**

(51) International Patent Classification (IPC):
*C08J 5/18* (2006.01)    *B29C 59/04* (2006.01)
*B32B 3/30* (2006.01)    *B32B 27/40* (2006.01)
*B29K 75/00* (2006.01)

(52) Cooperative Patent Classification (CPC):
**B29C 59/04; B32B 3/30; B32B 27/40; C08J 5/18**

(86) International application number:
**PCT/JP2022/032193**

(87) International publication number:
**WO 2023/032841 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021 JP 2021140051**

(71) Applicant: **Denka Company Limited**
**Tokyo 103-8338 (JP)**

(72) Inventors:
• **MAEDA, Keishi**
**Tokyo 103-8338 (JP)**
• **NAKANO, Shunsuke**
**Tokyo 103-8338 (JP)**
• **NONOSHITA, Sho**
**Tokyo 103-8338 (JP)**
• **ISHIHARA, Eika**
**Tokyo 103-8338 (JP)**
• **ADACHI, Kanna**
**Tokyo 103-8338 (JP)**

(74) Representative: **Murgitroyd & Company**
**165-169 Scotland Street**
**Glasgow G5 8PL (GB)**

(54) **RESIN SHEET HAVING HAIR-LIKE BODIES, AND MOLDED ARTICLE OF RESIN SHEET**

(57)    The purpose of the present invention is to provide a resin sheet of which secondary molding where a good tactile sensation is maintained is possible, and a molded article thereof.

Provided is a thermoplastic resin sheet having hair-like bodies arranged regularly on at least one surface of a base layer and in which a continuous phase is formed without a structural boundary between the base layer and the hairlike bodies, wherein a thermoplastic resin composition constituting the base layer and the hair-like bodies comprises a urethane-based elastomer, the urethane-based elastomer comprises a component (A) derived from a polyol with a number-average molecular weight of 450-900 and a component (B) derived from an aliphatic diol with a carbon number of 2-10, and the molar ratio of (A) and (B) is 60:40 to 88:12.

[FIG. 1]

**Description**

**TECHNICAL FIELD**

The present invention pertains to a resin sheet having hair-like bodies and a molded article thereof.

**BACKGROUND**

Conventionally, sheets of paper and polymer materials are used as interior materials of automobiles and the housings of associated components, housings of electronic devices and home appliances, building materials such as wallpaper, housings for toys and game consoles, and members of daily commodities. Further, as a method to impart a good tactile sensation to a surface of a sheet, Patent Document 1, for example, presents a resin sheet having hair-like bodies arranged regularly on a surface thereof.
Meanwhile, when such a resin sheet is used as, for example, an interior article of an automobile such as a dashboard or sheets, there is a need to affix the article to the surface of an object by, for example, insert molding.
Patent Document 1: WO 2018/016562 A

**SUMMARY OF THE INVENTION**

However, when molding to a surface of an object in secondary molding such as insert molding, it is understood that resin sheets as mentioned above contact the raw material resins of the melted object and the hair-like bodies may be greatly deformed and lost and the good tactile sensation may not be able to be maintained.
The problem to be solved by the present invention is to provide a resin sheet of which secondary molding in a state where a good tactile sensation is maintained is possible, and a molded article thereof.
That is, as a result of investigating various means, the present inventors found that secondary molding in a state where a good tactile sensation is maintained is possible by, in a thermoplastic resin sheet having hair-like bodies arranged regularly on at least one surface of a base layer and in which a continuous phase is formed without a structural boundary between the base layer and the hair-like bodies, adjusting such that the temperature when the average height of the hair-like bodies shrinks, due to heating for 5 minutes, 5% from the average height prior to heating becomes 130°C or greater and 200°C or less.
The present invention, which solves the above problem, is configured as follows.

(1) A thermoplastic resin sheet having hair-like bodies arranged regularly on at least one surface of a base layer and in which a continuous phase is formed without a structural boundary between the base layer and the hair-like bodies, wherein a temperature when an average height of the hair-like bodies shrinks, due to heating for 5 minutes, 5% from an average height prior to heating is 130°C or greater and 200°C or less.

(2) The resin sheet described in (1), wherein the average height of the hair-like bodies is 30 $\mu$m or greater and 500 $\mu$m or less, an average diameter of the hair-like bodies is 1 $\mu$m or greater and 50 $\mu$m or less, and an average spacing of the hair-like bodies is 20 $\mu$m or greater and 200 $\mu$m or less.

(3) The resin sheet described in (1) or (2), wherein the thermoplastic resin comprises a urethane-based elastomer.

(4) The resin sheet described in any of (1) to (3), wherein the resin sheet has a substrate layer on a surface opposite the hair-like bodies of the base layer.

(5) A molded article of the resin sheet described in any of (1) to (4).

(6) The molded article described in (5), wherein the molded article is an insert-molded article or a vacuum-molded article.

(7) The molded article described in (5) or (6), wherein the molded article is provided on an automobile interior material, an electronic device cladding, or a cosmetic container surface.

According to the present invention, a resin sheet of which secondary molding in a state in which a good tactile sensation is maintained is possible, and a molded article thereof can be provided.

**BRIEF DESCRIPTION OF DRAWINGS**

FIG. 1 is a schematic vertical side cross-sectional view showing a resin sheet according to a first embodiment of the present invention.

FIG. 2 is a schematic plan view of the resin sheet of FIG. 1.

FIG. 3 is a schematic vertical side cross-sectional view showing the layer structure of a resin sheet according to a second embodiment of the present invention.

**DESCRIPTION OF EMBODIMENTS**

Below, various embodiments of the resin sheet are described, followed by a description of the method for manufacturing the resin sheet, but in cases where the specific description provided for one embodiment applies to another embodiment, the corresponding description for the other embodiment is omitted.

[First Embodiment]

The resin sheet according to the first embodiment of the present invention is a thermoplastic resin sheet having hair-like bodies arranged regularly on at least one surface of a base layer and in which a continuous phase is formed without a structural boundary between the base layer and the hair-like bodies, wherein the temperature when the average height of the hair-like bodies shrinks, due to heating for 5 minutes, 5% from the average height prior to heating is 130°C or greater and 200°C or less.

<Base Layer>

A base layer (1a) is a layer serving as a base for hair-like bodies and refers to the portion of the surface, denoted by reference sign 1, other than the hair-like bodies 1b. The thickness of the base layer refers to the thickness from the roots of the hair-like bodies to the surface on the opposite side of the base layer. The average thickness of the base layer is preferably 15-500 $\mu$m, more preferably 30-300 $\mu$m, and more preferably 50-150 $\mu$m. By setting the thickness to 15 $\mu$m or greater, the height of the hair-like bodies can be sufficiently expressed. Further, by setting the thickness to 500 $\mu$m or less, the hair-like bodies can be formed efficiently. A continuous phase may be formed without a structural boundary between the base layer and the hair-like bodies. The absence of a structural boundary means that the base layer and the hair-like bodies are integrally formed and that there is no structurally clear boundary section therebetween. Moreover, forming a continuous phase refers to a state in which there is no seam between the base layer and the hair-like bodies and no discontinuities (a continuous phase is formed). This feature differs from a structure in which hair-like bodies are transplanted to a base layer. The base layer and the hair-like bodies may have the same composition and the bonds between the base layer and the hair-like bodies may include covalent bonds. A covalent bond refers to a chemical bond formed by an electron pair being shared by two atoms, and in thermoplastic resins which are chain molecules in which monomers are connected, each polymer is bonded by a covalent bond and is bonded more strongly than by the van der Waals bonds or hydrogen bonds acting between polymer molecules.

Further, the base layer and the hair-like bodies may be derived not from separate, but from the same solid thermoplastic resin sheet. Derived from the same solid thermoplastic resin sheet means, for example, the hair-like bodies and the base layer being obtained, directly or indirectly, based on the same solid resin sheet.

Further, the base layer and the hair-like bodies may be formed from the same solid thermoplastic resin sheet. Formed from the same solid thermoplastic resin sheet means that the hair-like bodies and the base layer are directly formed by processing a single resin sheet.

By forming a continuous phase without a structural boundary between the base layer and the hair-like bodies, the hair-like bodies separating from the base layer due to an external stimulus is suppressed and a sheet having a good tactile sensation is achieved. Moreover, manufacturing with fewer steps than when transplanting hair-like bodies becomes possible.

The base layer and the hair-like bodies comprise the same thermoplastic resin composition having a thermoplastic resin as a main component. Here, as a main component means containing 50 mass% or greater. Preferably, the resin composition contains 60 mass% or greater, 70 mass% or greater, 80 mass% or greater, or 90 mass% or greater. In one embodiment of the present invention, a resin comprising one or more of a urethane-based elastomer (TPU), a styrene-based resin, a polyolefin-based resin, a polyvinyl chloride resin, a thermoplastic elastomer, and a fluorine-based resin can be used.

The urethane-based elastomer is a resin that has a diisocyanate and a polyol as reaction raw materials and as the combination thereof, any combination in which the diisocyanate is diphenylmethane diisocyanate (MDI)-based, $H_{12}$ MDI-based, or hexamethylene diisocyanate (HDI)-based and the polyol is polyether-based, polyester-based, or polycarbonate-based may be selected, or a plurality thereof may be combined. In one embodiment of the present invention, a combination of an MDI-based or HDI-based diisocyanate and a carbonate-based polyol can be suitably used.

As the styrene-based resin, styrene-based monomers such as styrene, $\alpha$-methylstyrene, p-methylstyrene, dimethylstyrene, p-t-butylstyrene, or chlorostyrene alone or copolymers thereof, copolymers of such a styrene-based monomer and another monomer, for example, a styrene-acrylonitrile copolymer (AS resin), or of the styrene-based monomer and yet another polymer, for example, a graft polymer graft-polymerized in the presence of a diene-based rubber-like polymer such as polybutadiene, a styrene-butadiene copolymer, polyisoprene, or polychloroprene, for example, a polystyrene such as high-impact polystyrene (HIPS resin) or a styrene-acrylonitrile graft polymer (ABS resin) can be used. Further, a styrene-based thermoplastic elastomer can also be used.

A polyolefin-based resin means a resin comprising a polymer containing $\alpha$-olefin as a monomer and includes polyethylene-based resins and polypropylene-based resins. A high-density polyethylene, a low-density polyethylene, a linear low-density polyethylene, a linear medium-density polyethylene, etc. can be used as the polyethylene resin and not only these alone, but a copolymer, graft, or blend having these structures can also be used. Examples of the latter resin include products of copolymerizing or blending a resin having a polar group in a polyethylene chain, such as blends with an ethylene-vinyl acetate copolymer, an ethylene-acrylic acid copolymer, an ethylene-acrylic ester copolymer, an ethylene-methacrylic ester copolymer, an ethylene-vinyl acetate-vinyl chloride copolymer, or terpolymers with a further acid anhydride.

Further, a homopolypropylene, a random polypropylene, a block polypropylene, etc. can be used as the polypropylene resin. When using a homopolypropylene, the structure of the homopolypropylene may be any of isotactic, atactic, and syndiotactic. When using a random polypropylene, a substance preferably having 2-20 carbon atoms and more preferably having 4-12 carbon atoms, for example, ethylene, 1-butene, 1-pentene, 1-hexene, 1-heptene, 1-octene, 1-nonene, or 1-decene can be used as the $\alpha$-olefin to be copolymerized with propylene. When using a block polypropylene, a block copolymer (block polypropylene), a block copolymer comprising a rubber component, a graft copolymer, etc. can be used. In addition to using these olefin resins alone, they can also be used in combination with other olefin-based resins.

A vinyl chloride homopolymer or a copolymer of vinyl chloride and another comonomer can be used as the polyvinyl chloride resin. When the polyvinyl chloride is a copolymer, the polyvinyl chloride may be a random copolymer or may be a graft copolymer. One example of a graft copolymer is a copolymer in which, for instance, an ethylene-vinyl acetate copolymer or a thermoplastic urethane polymer is used as the backbone polymer and vinyl chloride is graft-polymerized thereto. The polyvinyl chloride of the present embodiment is a composition demonstrating an extrusion-moldable soft polyvinyl chloride and containing an additive such as a polymer plasticizer. A known polymer plasticizer can be used as the polymer plasticizer, but, for example, an ethylene copolymer polymer plasticizer such as an ethylene-vinyl acetate-carbon monoxide copolymer, an ethylene-(meth)acrylic ester-carbon monoxide copolymer, or an ethylene-vinyl acetate copolymer with a high vinyl acetate content can be given as a preferred example.

The thermoplastic elastomer includes elastomers having a structure in which a soft polymer substance and a hard polymer substance are combined. Specifically, examples include styrene-based elastomers, olefin-based elastomers, vinyl chloride-based elastomers, polyester-based elastomers, and polyamide-based elastomers. These elastomers can be selected from among those generally commercially available and used.

A vinylidene fluoride homopolymer and a vinylidene fluoride copolymer having vinylidene fluoride as the main component can be used as the fluorine-based resin. Polyvinylidene fluoride (PVDF) resins are crystalline resins exhibiting various crystal structures such as $\alpha$-type, $\beta$-type, $\gamma$-type, and $\alpha$p-type, but examples of the vinylidene fluoride copolymer include vinylidene fluoride-hexafluoropropylene copolymers, vinylidene fluoride-tetrafluoroethylene copolymers, vinylidene fluoride-chlorotrifluoroethylene copolymers, vinylidene fluoride-trifluoroethylene copolymers, vinylidene fluoride-tetrafluoroethylene-hexafluoropropylene terpolymers, vinylidene fluoride-chlorotrifluoroethylene-hexafluoropropylene terpolymers, and mixtures of two or more thereof.

It is preferable that the melt mass flow rate of the thermoplastic resin is 4 g/10 min. or greater at 190°C to 300°C. By setting the rate to 4 g/10 min. or greater, the transferability of the shape of the hair-like bodies can be improved. In addition, the melt mass flow rate is a value measured according to JIS K 7210 under the conditions of a load (2.16 Kg to 10.0 Kg) at a test temperature in the temperature range from 190°C to 300°C.

The thermoplastic resin composition may be alloyed with the abovementioned thermoplastic resins at an arbitrary ratio so long as the effects of the present invention are not inhibited. Furthermore, the thermoplastic resin may contain other additives. As the other additives, so long as the effects of the present invention are not inhibited, an additive such as a water/oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, a flame retardant, an anti-bacterial agent, an anti-viral agent, or a heat stabilizer can be added. Moreover, scrap resin generated in the resin sheet manufacturing process can also be mixed and used.

Examples of the water/oil repellent include silicone-based water repellents, carnauba wax, and fluorine-based water/oil repellents. Examples of the silicone include organopolysiloxane, dimethylpolysiloxane, methylphenylpolysiloxane, methylhydrogenpolysiloxane, etc. and among these, dimethylpolysiloxane is suitably used. Examples of commercial products include "Clinbell CB50-PP", "Clinbell CB-30PE", "Clinbell CB-1", "Clinbell CB-50AB" (manufactured by Fuji Chemical Industries, Ltd.), etc. in which a silicone is alloyed with a resin. Examples of the carnauba wax include, as commercially available products, "Carnauba No. 1" (manufactured by NIKKO RICA CORPORATION), etc. Examples of the fluorine-based water/oil repellent include surfactants having a perfluoroalkyl group and include, as a commercially available product, "Surflon KT-PA" (manufactured by AGC SEIMI CHEMICAL CO., LTD.). The amount of the water/oil repellent added is preferably 0.5 mass% to 25 mass%. At less than 0.5 mass%, sufficient water/oil repelling effects may be unobtainable, and at greater than 25 mass%, the moldability may be poor.

Examples of the anti-static agent include polyether ester amide-based high molecular weight type anti-static agents, ionomer-based high molecular weight type anti-static agents, etc. Examples of the polyether ester amide-based high molecular weight type anti-static agent include, as commercially available products, "Pelestat 230", "Pelestat 6500", "Pelectron AS", "Pelectron HS" (manufactured by Sanyo Chemical Industries, Ltd.), etc. Examples of the ionomer-based high molecular weight type anti-static agent include, as commercially available products, "Entire SD100", "Entire MK400" (manufactured by DU PONT-MITSUI POLYCHEMICALS), etc. The amount of the anti-static agent added is preferably 5 mass% to 30 mass%. At less than 5 mass%, sufficient anti-static properties may be unobtainable, and at greater than 30 mass%, the production costs increase.

As the anti-bacterial agent, either an inorganic or organic anti-bacterial agent may be added. Considering dispersibility, inorganic agents are preferable. Specifically, examples include metal ion (Ag, Zn, Cu) inorganic anti-bacterial agents, calcined shell calcium-based anti-bacterial agents, etc. Examples of commercially available metal ion inorganic anti-bacterial agents include "Bactekiller BM102VT" (manufactured by Fuji Chemical Industries, Ltd.), "Novaron VZF200", "Novaron (AG300)" (manufactured by TOAGOSEI CO., LTD.), "KM-10D-G", "IM-10D-L" (manufactured by Sinanen Zeomic Co., Ltd.), etc. Examples of calcined shell calcium-based anti-bacterial agents include "Scallow" (manufactured by FID, Ltd.), etc. The amount of the anti-bacterial agent added is preferably 0.5 mass% to 5 mass%. At less than 0.5 mass%, sufficient anti-bacterial properties may be unobtainable, and at greater than 5 mass%, the production costs increase.

As the lubricant/mold release agent, an alkyl-based lubricant/mold release agent such as an aliphatic hydrocarbon-based compound, a higher fatty acid-based compound, a higher aliphatic alcohol-based compound, or a fatty acid amide-based compound; a silicone-based lubricant/mold release agent; a fluorine-based lubricant/mold release agent; etc. can be used. When a lubricant/mold release agent is used, the amount added is preferably 0.01-5 parts by mass, more preferably 0.05-3 parts by mass, and yet more preferably 0.1-2 parts by mass, of a total of 100 parts by mass with the resin composition. By setting the amount added to 0.01 parts or greater, the risk of reduced mold releasing effect is reduced, and by setting the amount added to 5 parts by mass or less, the risk of bleed-out on the sheet surface is reduced.

Moreover, it is also possible to use a masterbatch, etc., in which a lubricant/mold release agent is alloyed in advance with a thermoplastic resin. Examples of commercially available masterbatches with a urethane-based thermoplastic elastomer base include "Waxmaster V" (manufactured by BASF), and considering production efficiency, it is preferable that a masterbatch be used. The amount of masterbatch added is preferably 1-8 parts by mass, more preferably 2-7 parts by mass, and yet more preferably 3-6 parts by mass of a total of 100 parts by mass with the resin composition.

<Hair-like Bodies>

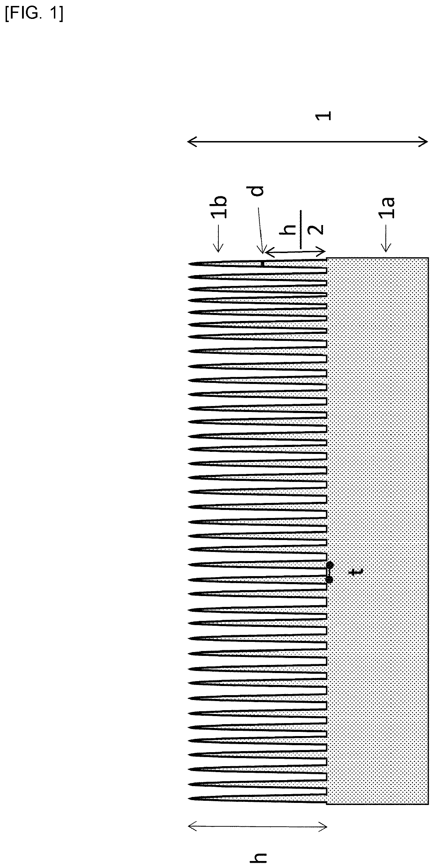

Hair-like bodies (1b) refer to a portion extending hair-like from the surface of the base layer (1a), as shown in FIG. 1. The hair-like bodies are arranged regularly on the surface of the base layer. Here, arranged regularly means an arranged state in which the hair-like bodies are not random, that is, a state arranged in an orderly fashion (e.g., at fixed spacing) in one direction or in two directions. Whether or not the arrangement of the hair-like bodies is regular is determined based on the state of arrangement of the roots of the hair-like bodies. In certain embodiments, the hair-like bodies are positioned on the base layer at a predetermined spacing and the positions of the bottom surfaces of the hair-like bodies are arranged in an orderly fashion in the longitudinal direction and the transverse direction of the base layer. Moreover, the form of arrangement of the hair-like bodies is not particularly limited and a vertically and horizontally arranged grid arrangement, a staggered arrangement, etc. can be selected. Due to the hair-like bodies being arranged regularly on the surface of the base layer, a good tactile sensation is readily expressed, uniformly and without irregularities. Falling of the hair-like bodies occurs due to the application of a load such as, for example, tracing with a finger, and finger marks in which the gloss and color tone differ from those of the surrounding portion can be formed. Moreover, due to the hair-like bodies, the tactile sensation can become like that of a suede-like napped sheet.

The average height (h) of the hair-like bodies is preferably 30-500 $\mu$m, more preferably 60-250 $\mu$m, yet more preferably 80-200 $\mu$m, and yet more preferably 90-180 $\mu$m. By setting the average height to 30 $\mu$m or greater, a good tactile sensation can be sufficiently ensured, and by setting the average height to 500 $\mu$m or less, a good tactile sensation such as moistness, softness, or fluffiness is obtained.

When the hair-like bodies stand roughly straight with respect to the base layer, the length from the root to the tip of the hair-like bodies represents the height of the hair-like bodies. Meanwhile, when the hair-like bodies are slanted with respect to the base layer or when the hair-like bodies have a portion that curls, the distance from the surface of the base layer at the location of the hair-like bodies farthest from the surface of the base layer is made the height h of the hair-like bodies. Moreover, the total value of the spacing from the tip to a central portion of the root of the hair-like bodies, subdivided by multi-point measurement, is made the length L of the hair-like bodies.

The average height of the hair-like bodies and the average length of the hair-like bodies can be obtained by using an electron microscope and image processing software to measure the height of the hair-like bodies and the length of the hair-like bodies at a number of arbitrary locations on the resin sheet and using the arithmetic mean values of the measurements.

The average diameter (d) of the hair-like bodies is preferably 1-50 $\mu$m, more preferably 5-50 $\mu$m, and yet more preferably 5-40 $\mu$m. By setting the average diameter of the hair-like bodies to 1 $\mu$m or greater, a good tactile sensation can be ensured, and by setting the average diameter of the hair-like bodies to 50 $\mu$m or less, a good tactile sensation such as moistness, softness, or fluffiness is obtained. The average diameter of the hair-like bodies is a value obtained by using an electron microscope and image processing software to measure the diameter at mid-height (h/2) of the hair-like bodies at a number of locations on the resin sheet and using the arithmetic mean value of the measurements.

Moreover, the aspect ratio of the hair-like bodies can be represented as (average height of the hair-like bodies/average diameter of the hair-like bodies). The aspect ratio of the hair-like bodies is preferably 2-20, more preferably 2-10, and yet more preferably 2-5. By setting the aspect ratio to 2 or greater, a good tactile sensation can be ensured, and by setting the aspect ratio to 20 or less, not only is a good tactile sensation such as moistness, softness, or fluffiness obtained, but the risk of the height-to-length ratio of the hair-like bodies becoming no higher than a certain level can also be reduced.

Meanwhile, the average bottom surface diameter of the hair-like bodies can also serve as a reference for the aspect ratio. The average bottom surface diameter of the hair-like bodies is preferably 10-150 $\mu$m, more preferably 20-120 $\mu$m, and yet more preferably 30-100 $\mu$m. The average bottom surface diameter of the hair-like bodies is a value obtained by measuring the spacing of neighboring hair-like bodies at a number of locations on the resin sheet and using the arithmetic mean value of the measurements. The aspect ratio, when the bottom surface diameter of the hair-like bodies serves as a reference therefor, is preferably 1.0-10, more preferably 1.0-5, and yet more preferably 1.0-2.5. By setting the aspect ratio to 1.0 or greater, a good tactile sensation can be ensured, and by setting the aspect ratio to 10 or less, not only is a good tactile sensation such as moistness, softness, or fluffiness obtained, but the risk of the height-to-length ratio of the hair-like bodies becoming no higher than a certain level can also be reduced.

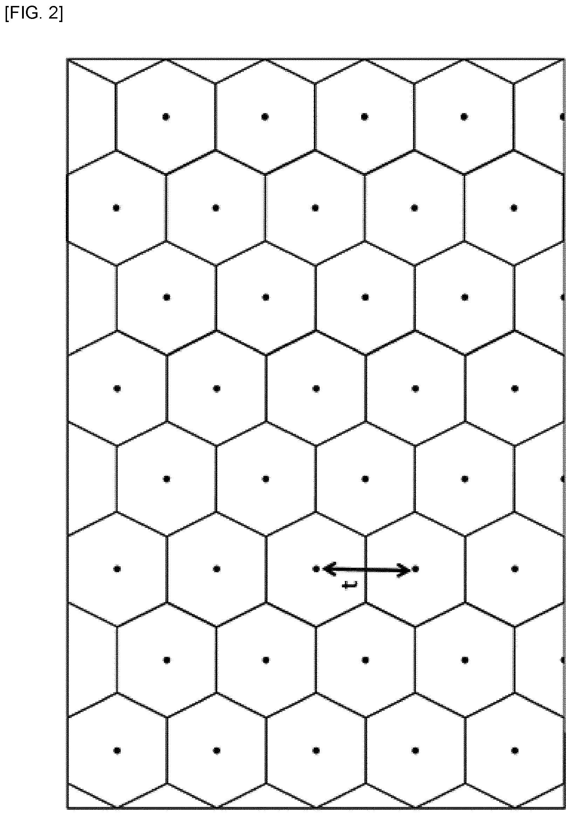

The average spacing (t) of the hair-like bodies is preferably 20-200 $\mu$m, more preferably 40-150 $\mu$m, and yet more preferably 40-100 $\mu$m. For example, as shown in FIG. 2, the spacing of the hair-like bodies means the distance between the center of the root of a hair-like body and the center of the root of a neighboring hair-like body. By setting the average spacing to 20 $\mu$m or greater, a good tactile sensation is ensured, and by setting the average spacing to 200 $\mu$m or less, a good tactile sensation such as moistness, softness, or fluffiness is obtained. The average spacing of the hair-like bodies is a value obtained by measuring the spacing of neighboring hair-like bodies at a number of locations on the resin sheet and using the arithmetic mean value of the measurements.

The shape of the hair-like bodies is not particularly limited and may be configured to extend hair-like in a direction away from the base layer in a shape in which the hair-like bodies gradually thin approaching the tip or in which a swelling is formed at the tip. In short, the hair-like bodies may have a shape in which the cross-sectional area gradually shrinks with increasing distance from the base layer and then once again increases before the shape terminates. Moreover, the shape of the tip part of the hair-like bodies may be bud-shaped or mushroom-shaped. Further, the hair-like bodies may have a portion positioned at the base end extending in a direction away from the base layer, a portion that extends from the portion positioned at the base end and is curved with a fixed curvature or a curvature that gradually changes, and furthermore, a portion that is wound in a helix shape or a spiral shape. In this case, the tip parts of the hair-like bodies may have a shape that is folded inward. By having such a shape, a good tactile sensation is expressed. Moreover, due to the bud-shaped or mushroom-shaped portion being hollow, a better tactile sensation is expressed. When forming a bud shape or mushroom shape at the hair-like tips, it is preferable that the ratio of the average diameter of the width of the bud shape or mushroom shape with respect to the average diameter of the hair-like bodies be 1.1 or greater. The height of the bud shape or mushroom shape is preferably 7 $\mu$m or greater. The average diameter of the hair-like bodies as well as the average diameter of the width and the height of the bud shape or mushroom shape are values obtained by measuring with a scanning electron microscope photograph and using the arithmetic mean values. The hair-like bodies consist of a thermoplastic resin. The same resins that can be used in the base layer can be used as the thermoplastic resin.

The thermoplastic resin included in the base layer and the hair-like bodies may form at least partially a three-dimensional cross-linked structure (e.g., a three-dimensional net-like structure). For example, in certain embodiments, at least some of the hair-like bodies are cross-linked bodies, and in other embodiments, the overall surface of the hair-like bodies is a cross-linked body, and in yet other embodiments, the entirety (from the boundary with the base layer to the tip part) of the hair-like bodies may be a cross-linked body. Examples of methods for forming a cross-linked body include a method involving molding a resin sheet and then irradiating the surface thereof having hair-like bodies with an electron beam and a method involving adding an organic peroxide and heating and humidifying during or after molding of the resin sheet. Examples of resins in which an organic peroxide is added include commercially available products such as "LINKLON" manufactured by Mitsubishi Chemical Corporation. In the present embodiment, it is preferable that cross-linked bodies be formed by electron beam irradiation (electron beam cross-linked bodies).

<Resin Sheet>

In the present embodiment, "tactile sensation" means the feeling and texture of a surface of the resin sheet. A judgment is made regarding whether a resin sheet surface feels comfortable when touched and when the surface is judged as feeling comfortable, a good specific texture with feelings such as moistness, softness, or fluffiness is made the good tactile sensation.

In one embodiment of the present invention, the thickness of the resin sheet refers to the sheet thickness combining the average height of the hair-like bodies and the average thickness of the base layer. The sheet thickness is preferably 65-1600 $\mu$m, more preferably 115-1050 $\mu$m, and yet more preferably 165-550 $\mu$m. By setting the thickness to 65 $\mu$m or greater, a good tactile sensation can be sufficiently ensured, and by setting the thickness to 1600 $\mu$m or less, manufacturing costs can be suppressed.

In the resin sheet of the present embodiment, the temperature when the average height of the hair-like bodies shrinks, due to heating for 5 minutes, 5% from the average height prior to heating is 130°C or greater and 200°C or less.

The rate of shrinkage of the hair-like bodies at that temperature is defined by the difference between the average height prior to heating and the average height after heating with respect to the average height prior to heating. Further, the temperature where the rate of shrinkage of the hair-like bodies becomes 5% is defined as the 5% hair-like body height reduction temperature of the resin sheet. The 5% hair-like body height reduction temperature can be measured by, while changing the temperature in a gear oven by 1°C, measuring the rate of shrinkage of the hair-like bodies at each temperature and checking the temperature at which the rate of shrinkage of the hair-like bodies becomes 5% for each resin sheet.

The 5% hair-like body height reduction temperature is more preferably set to 135°C or greater and 190°C or less and yet more preferably set to 138°C or greater and 185°C or less. By setting the 5% hair-like body height reduction temperature to 130°C or greater, it is possible to maintain a good tactile sensation even after insert molding, and by setting the temperature to 200°C or less, the hair-like bodies can be provided with a good tactile sensation without stiffening too much. Further, by setting the temperature to 130°C or greater and 155°C or less, the tactile sensation becomes moist, and by setting the temperature to greater than 155°C and 200°C or less, a silky tactile sensation can be achieved.

The 5% hair-like body height reduction temperature of 130°C or greater and 200°C or less can be achieved by adjusting the blending ratio or the molecular weights of the raw materials when synthesizing the thermoplastic resin composition.

[Second Embodiment]

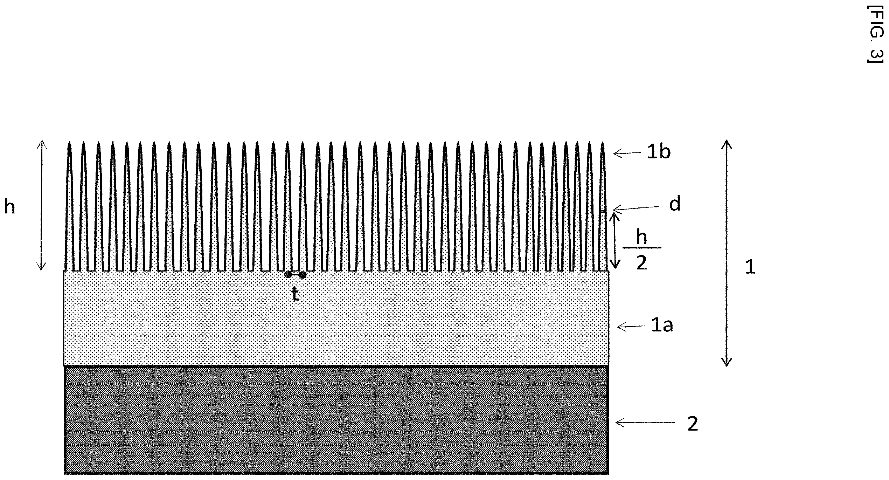

An example of the resin sheet according to a second embodiment of the present invention is a resin sheet in which a substrate layer is formed on a surface which is opposite the hair-like bodies of the base layer, as shown in FIG. 3. That is, the layer configuration of the resin sheet according to the second embodiment is, from top to bottom, the hair-like bodies and the base layer (1) and the substrate layer (2).

Here, the hair-like bodies are the same as those described in the first embodiment, so description thereof is omitted. However, the thickness of the hair-like bodies and the base layer represented by the total of the average height of the hair-like bodies and the average thickness of the base layer is preferably 150-1500 $\mu$m, more preferably 150-1050 $\mu$m, and yet more preferably 150-500 $\mu$m. By setting the thickness to 150 $\mu$m or greater, a good tactile sensation can be ensured, and by setting the thickness to 1500 $\mu$m or less, production costs can be suppressed.

The average thickness of the substrate layer is preferably 50-1500 $\mu$m, more preferably 100-1000 $\mu$m, and yet more preferably 150-500 $\mu$m. By setting the average thickness to 50 $\mu$m or greater, the film-forming process is facilitated, and by setting the average thickness to 1500 μm or less, production costs can be suppressed.

As the substrate layer in the resin sheet according to the second embodiment, it is preferable that a thermoplastic resin with excellent adhesion with the base layer be used, and a polycarbonate-based resin, a polyester-based resin, or a polymer alloy resin thereof can be suitably used. The mass ratio between the polycarbonate-based resin and the polyester-based resin is preferably 50:50 to 90:10, more preferably 60:40 to 80:20, and yet more preferably 65:35 to 75:25.

Here, the polymer alloy resin refers to a polymer multicomponent system. The polymer alloy resin may be a polymer blend of fixed miscibility by blending or the like, may be a block copolymer or a graft copolymer by copolymerization, or may be a mixture of resins with no miscibility.

Examples of the polycarbonate-based resin include substances derived from aliphatic dihydroxy compounds and substances derived from aromatic dihydroxy compounds. For example, substances derived from aromatic dihydroxy compounds can be suitably used, and substances derived from aromatic dihydroxy compounds in which two aromatic dihydroxy compounds are bonded via a certain type of bonding group (bisphenols) are particularly preferable. Substances manufactured by known manufacturing methods by polycondensation of a dihydroxy compound and phosgene or a carbonic ester can be used as these resins. The manufacturing method is not limited thereto, and commercially available resins can also be used.

As the polyester-based resin, polyethylene terephthalate; polybutylene terephthalate; polyethylene-2,6-naphthalate; polymethylene terephthalate; a polyester resin in which, as copolymerization components, for example, a diol component such as diethylene glycol, neopentyl glycol, or polyalkylene glycol and a dicarboxylic acid component such as adipic acid, sebacic acid, phthalic acid, isophthalic acid, or 2,6-naphthalene dicarboxylic acid are copolymerized; etc. can be used.

The substrate layer may contain other additives as necessary. As the other additives, so long as the effects of the present invention are not inhibited, an additive such as a water repellent, an oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal, etc. or a high molecular weight type anti-static agent such as polyether ester amide, a flame retardant, an anti-bacterial agent, an anti-viral agent, or a heat stabilizer can be added. Moreover, scrap resin generated in the resin sheet manufacturing process can also be mixed and used. Further, so long as the effects of the present invention are not inhibited, the substrate layer may have a partially cross-linked structure.

[Resin Sheet Manufacture]

The method for manufacturing a resin sheet according to the present application is not limited and may be any method, but typically includes steps of melt-extruding a raw material resin and adding regularly arranged hair-like bodies to at least one surface of the obtained extruded resin sheet.

In the manufacture of a multilayer sheet, any resin sheet molding method can be used. For example, a feed block or a multi-manifold die can be used. Moreover, the layer configurations of the embodiments of the resin sheet of the present application are basically as discussed previously, but beyond these, for example, scrap raw material generated in a manufacturing process for the resin sheet or molded container of the present invention may be added to the substrate layer or laminated as a further layer so long as degradation of physical properties, etc. is not observed.

The method for adding the hair-like bodies is not particularly limited and any method known by those skilled in the art can be used. Examples include a manufacturing method using an extrusion molding technique, a manufacturing method using a roll-to-roll technique, a manufacturing method using a photolithography technique, a manufacturing method using a hot-pressing technique, a manufacturing method using a pattern roll and a UV curable resin, a manufacturing method using a 3D printer, a method for covalent bonding with a polymerization reaction after embedding the hair-like bodies in the resin layer, etc.

For example, when using an extrusion molding technique, the resin sheet according to the present invention can be manufactured by extruding a resin sheet with a T-die technique and casting with a transfer roll on which a relief process has been performed and a touch roll so as to add the shapes of hair-like bodies to a surface of the resin sheet.

As the transfer roll on which a relief process has been performed, a roll in which micro-reliefs, with sizes from several micrometers to several hundreds of micrometers, have been applied regularly on a surface thereof with a laser engraving or electrocasting method, an etching method, a mill engraving method, etc. can be used. Here, regular means that the reliefs are in an arranged state that is not random, that is, are arranged in an orderly fashion in one direction or in two directions. The arrangement of the reliefs in certain embodiments can be selected from a vertically and horizontally arranged grid arrangement, a staggered arrangement, etc. Examples of the shape of the relief parts include, if the shape of a concavity, funnel-shapes (cone, quadrangular pyramid, triangular pyramid, hexagonal pyramid, etc.), semicircles, rectangles (quadrangular prism), etc. As the size thereof, the diameter of the opening of the concavity, the depth of the concavity, the spacing of the concavity shapes, etc. are from several micrometers to several hundreds of micrometers.

For example, a metal, a ceramic, etc. can be used as the material of the transfer roll. The spacing of the hair-like bodies can be adjusted by adjusting the spacing of the concavities on the transfer roll, and the height of the hair-like bodies can be adjusted by adjusting the depth of the concavities on the transfer roll, and the tactile sensation can also be adjusted thereby.

Moreover, it is preferable that a relief process with a high aspect ratio be performed on the transfer roll surface. For example, the aspect ratio (concavity depth/concavity opening diameter) when processing concavity shapes into the transfer roll surface is preferably 1.0-9.0 or 1.0-2.0. In performing a high-aspect-ratio relief process on the transfer roll surface, in comparison with an etching method, a blasting method, a mill engraving method, etc., a laser engraving method or an electrocasting method is suitable when performing precision processing in the depth direction and thus is particularly suitably used.

For example, a metal, a ceramic, etc. can be used as the material of the transfer roll. Meanwhile, various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon® layer may be formed on the surface of the touch roll.

Various materials can be used as the touch roll, for example, a roll made from silicone-based rubber, NBR-based rubber, EPT-based rubber, butyl rubber, chloroprene rubber, or fluorine rubber can be used. In certain embodiments, a touch roll with a rubber hardness (JIS K 6253) of 40-100 can be used. Further, a Teflon® layer may be formed on the surface of the touch roll.

The resin sheet of the present embodiment can be manufactured by using a roll set of the above transfer roll and touch roll.

In certain embodiments, the resin sheet of the present embodiment can be manufactured by adjusting the temperature of the transfer roll to near the crystal fusion temperature, the glass transition point, or the melting point of the thermoplastic resin (for example, 100-150°C when using a random polypropylene) and casting with a pinch pressure between the transfer roll and the touch roll of 30-120 Kg/cm$^2$. The cast resin sheet is taken in at a line speed of 0.5-30 m/min. using a pinch roll, etc.

Further, while the above embodiments are shown specifically, the present invention is not limited thereto.

[Molded Article]

The molded article of the present invention is a molded article using the resin sheet of the present invention. The resin sheet of the present invention is compatible with molding in general, and examples of molding methods include, other than insert molding and in-mold molding, general vacuum molding and pressure molding, and as applications thereof, a method of heating and softening a resin sheet in vacuum and overlaying on (molding to) a surface of an existing molded article by opening under atmospheric pressure, etc., but the molding methods are not limited thereto. Further, known sheet heating methods such as radiation heating with an infrared heater or the like, which is non-contact heating, can be adapted as a method to heat and soften a sheet before molding. In vacuum-pressure molding in certain embodiments, for example, a resin sheet is heated for 20-480 seconds at a surface temperature of 60-220°C and then molded onto an existing molded article surface and can be stretched to 1.05-2.50 times depending on the surface shape.

[Article]

The resin sheet in which the hair-like bodies have been added to a surface thereof according to the present invention can be applied to a use requiring the good tactile sensation indicated above. For example, the resin sheet of the present invention can be applied as interior materials of automobiles, electronic device cladding, or cosmetic container surface materials.

Examples of automobile interior materials include the portions of the automobile interior that hands come into contact with such as the steering wheel, dashboard, levers, and switches. Examples include interior materials in which the abovementioned resin sheet is molded and attached to a surface of a known instrument panel or pillar (for example, JP 2009-184421 A). By attaching the resin sheet, an interior material to which a good tactile sensation has been imparted can be achieved. As the material of the resin sheet to be attached, in consideration of light resistance and chemical resistance, olefin-based resins, vinyl chloride-based resins, and urethane-based elastomers are preferable. The method for attaching the resin sheet and the interior material together is not particularly limited.

Examples of the electronic device cladding include transmitter housings for keyless entry systems, smartphone housings, smartphone cases, music player cases, game console housings, digital camera housings, electronic notebook housings, calculator housings, tablet housings, mobile computer housings, keyboards, mice, etc. Examples include portable transmitters in which the resin sheet of the present invention is molded and attached to a surface of a portable transmitter housing of a known keyless entry system (for example, JP 2005-228911 A). By attaching the resin sheet, a portable transmitter to which a good tactile sensation has been imparted can be achieved. As the material of the resin sheet to be attached, an olefin-based resin or a urethane-based elastomer is preferable. The method for attaching the resin sheet and the housing together is not particularly limited.

Examples of cosmetic containers include containers for face cream, pack cream, foundation, and eyeshadow, and for example, a cosmetic container in which the resin sheet of the present application is molded and attached to a surface of a lid member of a known container for foundation (JP 2017-29608 A) can be raised. By attaching the resin sheet, a cosmetic container to which a good tactile sensation has been imparted can be achieved. As the material of the resin sheet to be attached, an olefin-based resin or a urethane-based elastomer is preferable. The method for attaching the resin sheet is not particularly limited.

Furthermore, a hair-like body sheet in which words or designs are printed on the surface of the hair-like bodies with a general printing method (an offset printing method, a gravure printing method, a flexographic printing method, a screen printing method, foil stamping, etc.) can be manufactured and applied to the above use. The material of the resin sheet to be printed on is not particularly limited, but it is preferable that the printability with the ink used in printing be considered.

Moreover, a laminated body in which the resin sheet of the present invention is laminate molded (dry laminate molded or extrusion laminate molded) with a printed article on which words, designs, etc. are printed (such as paper or a metal thin film) or with a non-woven cloth, etc. can be manufactured. For example, a business card with a tactile sensation can be manufactured by laminate molding to the printing surface of the business card. The material of the resin sheet to be laminated is not particularly limited.

## EXAMPLES

The present invention shall be explained in more detail below using examples and comparative examples, but the present invention is not at all limited by the details of the examples, etc. Note that "parts" in the present examples are on the basis of weight.

The raw materials used in the examples, etc. and the manufacturing methods therefor are as follows.

· (Polyol A-1)

A reaction apparatus in which an agitator, a thermometer, a heating device, and a distillation tower are combined was charged with 926 g of 1,6-hexanediol (hereafter 1,6-HD) and 671 g of diethyl carbonate (hereafter DEC) such that the molar ratio of 1,6-HD and DEC became 1.38:1 and was further charged with 0.05 g of tetrabutyl titanate (hereafter TBT) as a reaction catalyst, and the temperature was gradually raised to 190°C under a nitrogen stream. At the point in time when the flow of ethanol slowed and the temperature at the top of the distillation tower reached 50°C or lower, the reaction temperature was kept at 190°C, the pressure was gradually reduced to 1.3 kPa, and the reaction was performed for a further 7 hours at a pressure of 1.3 kPa. Furthermore, the reaction was continued at a reaction temperature of 190°C and under a reduced pressure of 1.3 kPa or lower until the hydroxyl value of the reactants became 222-226 (mgKOH/g), resulting in polyol A-1. The hydroxyl value of polyol A-1 is 224.4 (mgKOH/g) and the number-average molecular weight was calculated to be 500.

· (Polyol A-2)

Polyol A-2 was obtained by synthesizing with the same method as for polyol A-1 other than 913 g of 1,6-HD and 686 g of DEC being charged such that the molar ratio of 1,6-HD and DEC becomes 1.33:1. The hydroxyl value of polyol A-2 is 172.6 (mgKOH/g) and the number-average molecular weight was calculated to be 650.

· (Polyol A-3)

Polyol A-3 was obtained by synthesizing with the same method as for polyol A-1 other than 898 g of 1,6-HD and 700 g of DEC being charged such that the molar ratio of 1,6-HD and DEC becomes 1.28:1. The hydroxyl value of polyol A-3 is 149.6 (mgKOH/g) and the number-average molecular weight was calculated to be 750.

· (Polyol A-4)

Polyol A-4 was obtained by synthesizing with the same method as for polyol A-1 other than 878 g of 1,6-HD and 720 g of DEC being charged such that the molar ratio of 1,6-HD and DEC becomes 1.22:1. The hydroxyl value of polyol A-4 is 132.0 (mgKOH/g) and the number-average molecular weight was calculated to be 850.

· (Polyol A-5)

Polyol A-5 was obtained by synthesizing with the same method as for polyol A-1 other than 938 g of 1,6-HD and 660 g of DEC being charged such that the molar ratio of 1,6-HD and DEC becomes 1.42:1. The hydroxyl value of polyol A-5 is 280.5 (mgKOH/g) and the number-average molecular weight was calculated to be 400.

· (Polyol A-6)

Polyol A-6 was obtained by synthesizing with the same method as for polyol A-1 other than 872 g of 1,6-HD and 726 g of DEC being charged such that the molar ratio of 1,6-HD and DEC becomes 1.20:1. The hydroxyl value of polyol A-6 is 118.1 (mgKOH/g) and the number-average molecular weight was calculated to be 950.

Note that the calculations of number-average molecular weights were performed on the basis of the following formula.

$$\text{Number-average molecular weight} = (56100 \times 2)/\text{hydroxyl value}$$

(The hydroxyl values of the polycarbonate diols were determined with titrimetry in accordance with JIS K 1557. Here, the unit for the hydroxyl value is mgKOH/g.

The acid values of the polycarbonate diols were determined with titrimetry in accordance with JIS K 1557. Here, the unit for the acid value is mgKOH/g.)

· (B) Aliphatic diol: 1,4-butanediol

· (C-1) Diisocyanate: Hexamethylene diisocyanate (HDI)

· (C-2) Diisocyanate: 4,4'-diphenylmethane diisocyanate (MDI)

· (D) Mold release agent masterbatch "Waxmaster V" (manufactured by BASF)

· (E) PC/polyester resin "PCX-6694" (manufactured by Sumika Polycarbonate Ltd.)

(Manufacture of the TPU which serves as the hair-like bodies and base layer)

The reaction apparatus to which the agitator and thermometer were attached was charged with a polyol (A) and the aliphatic diol (B) and these were mixed uniformly so as to become the compositions described in Table 1. The obtained mixed liquids were heated to 100°C and a diisocyanate (C) was then added and forcibly agitated with a hand mixer and once the reaction temperature reached 130°C, the mixed liquid was poured onto release paper and hardened. The obtained solids were fired in an electric kiln at 120°C for one hour and after being cooled to room temperature, the solids were pulverized to obtain flake-like TPUs.

The obtained flake-like TPUs were compounded with the (D) mold release agent masterbatch with a twin-screw extruder such that the weight ratio was 95:5, and TPU pellets (G) which serve as raw materials for the hair-like bodies and the base layer were obtained by granulating the obtained strands.

(Manufacturing process for resin sheet having hair-like bodies)

[Examples 1-6 and Comparative Examples 1-3] The TPU (G) which serves as the hair-like bodies and the base layer was streamed from a 40 mm single-screw extruder, the (E) PC/polyester resin which serves as the substrate layer was streamed from a 65-mm single-screw extruder, and a resin sheet was extruded with a T-die method. The extruded resin sheet was cast using a relief-processed transfer roll on which a relief process had been performed with chromium oxide spraying and a laser engraving method and which was adjusted to 60-150°C and a silicone-based rubber touch roll having a rubber hardness of 70 and adjusted to 10-90°C and the cast resin sheet was taken in at a line speed of 1-15 m/min. using a pinch roll. Resin sheets with the compositions, the thicknesses, and the surface shapes shown in Table 1 were thereby produced.

The evaluation methods for the various characteristics of the resin sheets and the molded articles in which the resin sheets were vacuum-pressure molded, manufactured in the examples and comparative examples are as follows.

(1) Average height of hair-like bodies, average length of hair-like bodies, average diameter of hair-like bodies, average spacing of hair-like bodies, and average thickness of base layer

The height (h) of the hair-like bodies, the diameter (d) of the hair-like bodies, the spacing (t) of the hair-like bodies, the thickness of the base layer, and the thickness of the substrate layer of the resin sheet were measured using a laser microscope (VK-X100 manufactured by KEYENCE CORPORATION). Note that the measured samples were cross-sectional slices cut from the resin sheets at three arbitrary locations using a microtome. The height of 10 hair-like bodies was measured for each sample, and an arithmetic mean value of the 30 measurements was used as the average height of the hair-like bodies. For the average diameter of the hair-like bodies, the diameter of 10 hair-like bodies of each sample was measured at mid-height (h/2), and an arithmetic mean value of the 30 measurements was used. For the average spacing of the hair-like bodies, the distance from the center of the root of one hair-like body to the center of the root of a neighboring hair-like body was measured at 10 locations on each sample, and an arithmetic mean value of the 30 measurements was used. For the average thickness of the base layer, the thickness from the roots of the hair-like bodies to the other layer interface was measured at 10 locations on each sample, and an arithmetic mean value of the 30 measurements was used. For the average thickness of the substrate layer, the thickness from the boundary with the base layer to the interface opposite the surface having the hair-like bodies was measured at 10 locations on each sample, and an arithmetic mean value of the 30 measurements was used.

(3) Measurement of the rate of shrinkage of the hair-like bodies

Test pieces were obtained by cutting pieces with a size of 100 mm × 100 mm from three arbitrary locations on the obtained resin sheets. The test pieces were placed in a gear oven set to a predetermined temperature for 5 minutes, and the average height of the hair-like bodies after removal was measured using a laser microscope in the same manner as above. The rate of shrinkage of the hair-like bodies at that temperature is defined as the difference between the average height prior to heating and the average height after heating with respect to the average height prior to heating, the temperature at which the rate of shrinkage becomes 5% is defined as the 5% hair-like body height reduction temperature of the resin sheet, and the 5% hair-like body height reduction temperature was measured by measuring the rate of shrinkage of the hair-like bodies at each temperature while changing the temperature in the gear oven by 1°C.

(2) Evaluation of tactile sensation following insert molding

Insert molding was performed with the obtained resin sheets. A mold for an insert injection molding machine from which a resin plate with a width of 250 mm, a length of 140 mm, and a thickness of 3 mm is obtained was prepared, and the resin sheets were trimmed so as to fit without gaps on the surface formed from the width of 250 mm and the length of 140 mm. The surfaces of the trimmed resin sheets having the hair-like bodies were contacted with the mold surface and disposed such that the substrate layer faces the resin flow side of the cavity. Note that the mold has a structure wherein a surface formed from the width of 250 mm and the thickness of 3 mm has a one-point gate and the injection resin flows in parallel with the resin sheet. Using an injection molding machine, a PC resin which has been heated to 280°C and melted is injected into the mold where such a resin sheet has been disposed and insert-molded articles of the resin sheets having the hair-like bodies were obtained.

A sensory evaluation of the good tactile sensation was performed by having an external panel which totals 10 people, 5 men and 5 women, touch the resin sheets. Evaluation was made with a ten-point scale for the specific tactile sensations (smooth, silky, moist, dry, coarse, etc.) when touching the resin sheet surface, and the tactile sensation with the highest score was made the tactile sensation of the resin sheet surface. In Table 1, "○" indicates that the score for smooth, silky, or moist was high and that even after secondary molding a good tactile sensation like that of a suede-like napped sheet was obtained. "×" indicates that the score for dry or coarse was high and that a good tactile sensation after secondary molding was not obtained.

Evaluative testing of various characteristics was performed using the resin sheets obtained in the examples and comparative examples and the results are shown in Table 1.

Table 1

| | | TPU COMPOSITION | | | | | | | | | | RESIN SHEET HAVING HAIR-LIKE BODIES | | | | | | |
|---|---|---|---|---|---|---|---|---|---|---|---|---|---|---|---|---|---|---|
| | | POLYOL | | | | | | ALIPHATIC DIOL (B) | DIISOCYANATE | | HAIR-LIKE BODIES | | | BASE LAYER | SUBSTRATE LAYER | 5% HAIR-LIKE BODY HEIGHT REDUCTION TEMPERATURE | MOLDED ARTICLE TACTILE SENSATION |
| | | (A-1) Mn=500 | (A-2) Mn=650 | (A-3) Mn=750 | (A-4) Mn=850 | (A-5) Mn=400 | (A-6) Mn=950 | | (C-1) HDI | (C-2) MDI | AVERAGE HEIGHT h (μm) | AVERAGE DIAMETER d (μm) | AVERAGE SPACING t (μm) | THICKNESS (μm) | THICKNESS (μm) | | |
| EXAMPLE 1 | MOLAR RATIO | 0.73 | | | | | | 0.27 | 1 | | 120 | 30 | 60 | 100 | 300 | 158°C | ○ (SMOOTH) |
| | PARTS BY WEIGHT | 655 | | | | | | 44 | 301 | | | | | | | | |
| EXAMPLE 2 | MOLAR RATIO | | 0.80 | | | | | 0.20 | 1 | | 120 | 30 | 60 | 100 | 300 | 150°C | ○ (MOIST) |
| | PARTS BY WEIGHT | | 737 | | | | | 25 | 238 | | | | | | | | |
| EXAMPLE 3 | MOLAR PATIO | | | 0.84 | | | | 0.16 | 1 | | 120 | 30 | 60 | 100 | 300 | 145°C | ○ (MOIST) |
| | PARTS BY WEIGHT | | | 775 | | | | 18 | 207 | | | | | | | | |

(continued)

| | | TPU COMPOSITION | | | | | | | | | | RESIN SHEET HAVING HAIR-LIKE BODIES | | | | | | |
|---|---|---|---|---|---|---|---|---|---|---|---|---|---|---|---|---|---|---|
| | | POLYOL | | | | | | ALIPHATIC DIOL (B) | DIISOCYANATE | | HAIR-LIKE BODIES | | | BASE LAYER | SUBSTRATE LAYER | 5% HAIR-LIKE BODY HEIGHT REDUCTION TEMPERATURE | MOLDED ARTICLE TACTILE SENSATION |
| | | (A-1) Mn=500 | (A-2) Mn=650 | (A-3) Mn=750 | (A-4) Mn=850 | (A-5) Mn=400 | (A-6) Mn=950 | | (C-1) HDI | (C-2) MDI | AVERAGE HEIGHT h ($\mu$m) | AVERAGE DIAMETER d ($\mu$m) | AVERAGE SPACING t ($\mu$m) | THICKNESS ($\mu$m) | THICKNESS ($\mu$m) | | |
| EXAMPLE 4 | MOLAR RATIO | | | | 0.87 | | | 0.13 | 1 | | 120 | 30 | 60 | 100 | 300 | 138°C | ○ (MOIST) |
| | PARTS BY WEIGHT | | | | 805 | | | 13 | 183 | | | | | | | | |
| EXAMPLE 5 | MOLAR RATIO | 0.63 | | | | | | 0.37 | | 1 | 120 | 30 | 60 | 100 | 300 | 185°C | O (SILKY) |
| | PARTS BY WEIGHT | 526 | | | | | | 56 | | 418 | | | | | | | |
| EXAMPLE 6 | MOLAR RATIO | | 0.79 | | | | | 0.21 | | 1 | 120 | 30 | 60 | 100 | 300 | 154°C | ○ (MOIST) |
| | PARTS BY WEIGHT | | 656 | | | | | 24 | | 320 | | | | | | | |

| | | TPU COMPOSITION | | | | | | | | | RESIN SHEET HAVING HAIR-LIKE BODIES | | | | | | |
|---|---|---|---|---|---|---|---|---|---|---|---|---|---|---|---|---|---|
| | | POLYOL | | | | | | ALIPHATIC DIOL (B) | DIISOCYANATE | | HAIR-LIKE BODIES | | | BASE LAYER | SUBSTRATE LAYER | 5% HAIR-LIKE BODY HEIGHT REDUCTION TEMPERATURE | MOLDED ARTICLE TACTILE SENSATION |
| | | (A-1) Mn=500 | (A-2) Mn=650 | (A-3) Mn=750 | (A-4) Mn=850 | (A-5) Mn=400 | (A-6) Mn=950 | | (C-1) HDI | (C-2) MDI | AVERAGE HEIGHT h (μm) | AVERAGE DIAMETER d (μm) | AVERAGE SPACING t (μm) | THICKNESS (μm) | THICKNESS (μm) | | |
| COMPARATIVE EXAMPLE 1 | MOLAR RATIO | | | | | 0.90 | | 0.10 | 1 | | 120 | 30 | 60 | 100 | 300 | 125°C | × (DRY) |
| | PARTS BY WEIGHT | | | | | 828 | | 9 | 163 | | | | | | | | |
| COMPARATIVE EXAMPLE 2 | MOLAR RATIO | | | | 0.92 | | | 0.08 | 1 | | 120 | 30 | 60 | 100 | 300 | 118°C | × (DRY) |
| | PARTS BY WEIGHT | | | | 817 | | | 8 | 176 | | | | | | | | |
| COMPARATIVE EXAMPLE 3 | MOLAR RATIO | | | | 0.58 | | | 0.42 | | 1 | 120 | 30 | 60 | 100 | 300 | 207°C | × (ROUGH) |
| | PARTS BY WEIGHT | | | | 446 | | | 73 | | 481 | | | | | | | |

The following is clear from the results shown in Table 1.

It was discovered that all the resin sheets in Examples 1-6 have a good tactile sensation, and moreover, that the 5% hair-like body height reduction temperature is higher than 130°C, which is the temperature typically reached by melting resins in insert molding, and a good tactile sensation is maintained even after insert molding.

Meanwhile, the resin sheet of Comparative Example 1 is a resin sheet where the 5% hair-like body height reduction temperature is 125°C, but the hair-like bodies greatly deform due to insert molding and the tactile sensation thereof becomes dry, and it was not possible to perform insert molding in a state where a good tactile sensation is maintained.

The resin sheet of Comparative Example 2 is a resin sheet where the 5% hair-like body height reduction temperature is 118°C, but the hair-like bodies greatly deform due to insert molding and the tactile sensation thereof becomes dry, and it was not possible to perform insert molding in a state where a good tactile sensation is maintained.

The resin sheet of Comparative Example 3 is a resin sheet where the 5% hair-like body height reduction temperature is 207°C. Although it was possible to perform insert molding in a state where the tactile sensation prior to insert molding is maintained, the hardness of the thermoplastic resin composition constituting the base layer and the hair-like bodies was high, the tactile sensation both before and after insert molding was coarse, and the resin sheet did not have a good tactile sensation.

The present invention was described above using various embodiments, but it need not be mentioned that the technical scope of the present invention is not limited to the scope described in the above embodiments. It is clear to those skilled in the art that it is possible to add various modifications or improvements to the abovementioned embodiments. Further, it is clear from the recitations of the patent claims that aspects in which such modifications or improvements are added are included in the technical scope of the present invention.

## INDUSTRIAL APPLICABILITY

The resin sheet of the present embodiment can maintain a good tactile sensation even if secondary molding is performed, so the resin sheet has industrial applicability as a resin sheet of which secondary molding is possible and a molded article thereof.

## REFERENCE SIGNS LIST

1   Hair-like bodies and base layer
1a   Base layer
1b   Hair-like bodies
d   Diameter of hair-like bodies
h   Height of hair-like bodies
t   Spacing of hair-like bodies
2   Substrate layer

## Claims

1. A thermoplastic resin sheet having hair-like bodies arranged regularly on at least one surface of a base layer and in which a continuous phase is formed without a structural boundary between the base layer and the hair-like bodies, wherein a temperature when an average height of the hair-like bodies shrinks, due to heating for 5 minutes, 5% from an average height prior to heating is 130°C or greater and 200°C or less.

2. The resin sheet according to claim 1, wherein an average height of the hair-like bodies is 30 $\mu$m or greater and 500 $\mu$m or less, an average diameter of the hair-like bodies is 1 $\mu$m or greater and 50 $\mu$m or less, and an average spacing of the hair-like bodies is 20 $\mu$m or greater and 200 $\mu$m or less.

3. The resin sheet according to claim 1 or 2, wherein the thermoplastic resin comprises a urethane-based elastomer.

4. The resin sheet according to claim 1 or 2, wherein the resin sheet has a substrate layer on a surface opposite the hair-like bodies of the base layer.

5. A molded article of the resin sheet according to claim 1 or 2.

6. The molded article according to claim 5, wherein the molded article is an insert-molded article or a vacuum-molded article.

7. The molded article according to claim 5, wherein the molded article is provided on an automobile interior material, an electronic device cladding, or a cosmetic container surface.

[FIG. 1]

[FIG. 2]

[FIG. 3]

## INTERNATIONAL SEARCH REPORT

International application No.

**PCT/JP2022/032193**

### A. CLASSIFICATION OF SUBJECT MATTER

*C08J 5/18*(2006.01)i; *B29C 59/04*(2006.01)i; *B32B 3/30*(2006.01)i; *B32B 27/40*(2006.01)i; *B29K 75/00*(2006.01)n
FI:   C08J5/18 CFF; B32B3/30; B32B27/40; B29C59/04 Z; B29K75:00

According to International Patent Classification (IPC) or to both national classification and IPC

### B. FIELDS SEARCHED

Minimum documentation searched (classification system followed by classification symbols)

C08J5/18; B29C59/04; B32B3/30; B32B27/40; C08L75/00; C08G18/44; B29K75/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-189420 A (DENKA CO., LTD.) 26 November 2020 (2020-11-26)<br>whole document, in particular, claims, paragraph [0011], examples, fig. 1-5 | 1-7 |
| X | WO 2021/145295 A1 (DENKA CO., LTD.) 22 July 2021 (2021-07-22)<br>whole document, in particular, claims, paragraph [0011], examples, fig. 1-3 | 1-7 |
| A | WO 2020/196638 A1 (DENKA CO., LTD.) 01 October 2020 (2020-10-01)<br>whole document | 1-7 |
| A | WO 2019/049897 A1 (DENKA CO., LTD.) 14 March 2019 (2019-03-14)<br>whole document | 1-7 |
| A | WO 2018/016562 A1 (DENKA CO., LTD.) 25 January 2018 (2018-01-25)<br>whole document | 1–7 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 397 699 A1**

## INTERNATIONAL SEARCH REPORT
### Information on patent family members

International application No.

**PCT/JP2022/032193**

| Patent document cited in search report | | | Publication date (day/month/year) | Patent family member(s) | | | Publication date (day/month/year) |
|---|---|---|---|---|---|---|---|
| JP | 2020-189420 | A | 26 November 2020 | (Family: none) | | | |
| WO | 2021/145295 | A1 | 22 July 2021 | (Family: none) | | | |
| WO | 2020/196638 | A1 | 01 October 2020 | EP whole document CN KR TW | 3928955 113631351 10-2021-0143179 202041356 | A1 A A A | |
| WO | 2019/049897 | A1 | 14 March 2019 | US whole document EP CN KR TW | 2020/0215787 3670147 111032313 10-2020-0049782 201920392 | A1 A1 A A A | |
| WO | 2018/016562 | A1 | 25 January 2018 | US whole document EP CN KR TW ES | 2019/0283301 3488993 109476075 10-2019-0032398 201815542 2882163 | A1 A1 A A A T | |

Form PCT/ISA/210 (patent family annex) (January 2015)

**EP 4 397 699 A1**

**Patent documents cited in the description**

- WO 2018016562 A
- JP 2009184421 A
- JP 2005228911 A
- JP 2017029608 A